# EUROPEAN PATENT SPECIFICATION

(11) **EP 4 456 285 B1**
(45) Date of publication and mention of the grant of the patent: **26.08.2026**
(21) Application number: 22911879.9
(22) Date of filing: 20.12.2022
(51) Int. Cl.: H01M 50/204, H01M 50/211, H01M 50/502, H01M 50/507, H01M 50/533, H01M 50/519

(54) **LOGICAL CELL, SECONDARY BATTERY MODULE, AND SECONDARY BATTERY PACK COMPRISING SAME**
LOGISCHE ZELLE, SEKUNDÄRBATTERIEMODUL UND SEKUNDÄRBATTERIEPACK DAMIT
CELLULE LOGIQUE, MODULE DE BATTERIE SECONDAIRE ET BLOC-BATTERIE SECONDAIRE LE COMPRENANT

(30) Priority: 24.12.2021 KR 20210187826; 24.12.2021 KR 20210187827
(43) Date of publication of application: 30.10.2024
(60) Divisional application: 25193963.3 / 4 636 935
(73) Proprietor: LG Energy Solution, Ltd., Seoul 07335 (KR)
(72) Inventor: LEE, Sun Jung, 34122 Daejeon (KR); LEE, Tae Kyeong, 34122 Daejeon (KR); HEO, Nam Hoon, 34122 Daejeon (KR); SHIN, Ju Hwan, 34122 Daejeon (KR); LEE, Hyoung Suk, 34122 Daejeon (KR)
(74) Representative: Goddar, Heinz J.
(86) International application number: PCT/KR2022/020877
(87) International publication number: WO 2023/121246

(56) References cited:
- CN-A- 113 193 264
- CN-U- 214 898 775
- CN-U- 214 898 777
- KR-A- 20200 079 774
- KR-A- 20200 106 378
- KR-A- 20200 131 500
- KR-A- 20210 037 454
- KR-B1- 101 746 127
- US-A1- 2018 048 033

## Description

### TECHNICAL FIELD

### CROSS-REFERENCE TO RELATED APPLICATION

The present application claims the benefit of the priority of Korean Patent Application Nos. 10-2021-0187826, filed on December 24, 2021, and 10-2021-0187827, filed on December 24, 2021.

### TECHNICAL FIELD

The present invention relates to a logical cell, a secondary battery module, and a secondary battery pack including the same.

### BACKGROUND ART

A secondary battery refers to a battery that is chargeable and dischargeable, unlike a primary battery that is not charged, and examples of the secondary battery may include a nickel cadmium battery, a nickel hydrogen battery, a lithium ion battery, and a lithium ion polymer battery. Such a secondary battery is being applied to be used in small-sized products such as digital cameras, notebooks, mobile phones, PDAs, E-bikes, and the like as well as large-sized products requiring high power such as electric vehicles and hybrid vehicles, power storage devices for storing surplus power or renewable energy, and backup power storage devices.

Such a secondary battery is classified into a pouch-type secondary battery and a can type secondary battery according to a material of a battery case accommodating an electrode assembly. In the pouch-type secondary battery, the electrode assembly is accommodated in a pouch made of a flexible polymer material having a variable shape. In addition, in the can-type secondary battery, an electrode assembly is accommodated in a case made of a metal or plastic material having a predetermined shape.

In addition, the secondary battery may be constituted by cells, modules, and packs according to a unit for collecting secondary batteries. The cell may be a basic unit of the secondary battery that is capable of being used by charging electrical energy, which may be the above-described pouch-type secondary battery or the can-type secondary battery. The secondary battery module refers to an assembly, in which the predetermined number of cells are bundled or are put in a frame so as to protected against an external impact, heat, and vibration, and the pack may be a final form of a battery system and be completed by mounting various control and protection systems such as BMS, a cooling system, and the like, on the secondary battery module.

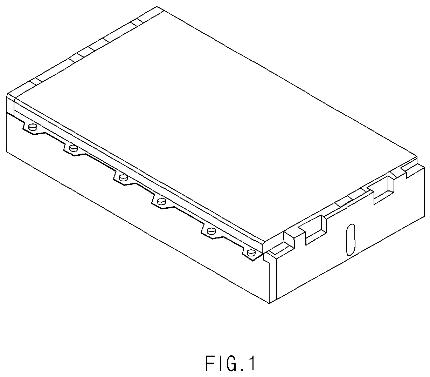

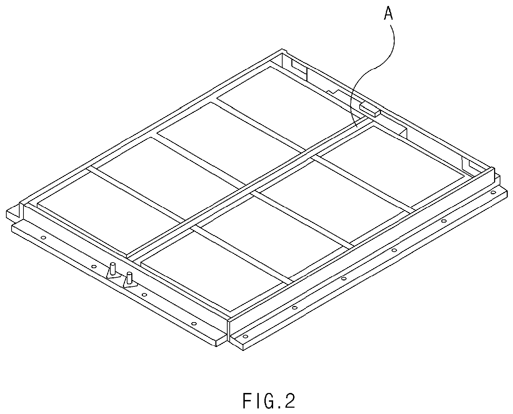

FIG. 1 is a perspective view illustrating a secondary battery module according to a related art. FIG. 2 is a perspective view illustrating a secondary battery pack according to the related art. Referring to FIGS. 1 and 2, in the secondary battery module and pack according to the related art, cells are arranged in a thickness direction of the cell to constitute the module, and the secondary battery module is disposed in a lattice shape inside a pack case. However, in this manner, a lot of spaces and components A for disposing or connecting the secondary battery module as the lattice shape are required, and particularly, an end plate, an isolation cover, and a module and an inter busbar for connecting the modules to each other are additionally required to increase in distance between the cells in the pack unit. This not only decreases in energy density per unit volume in the pack unit, but also increases in volume of the pack to increase in space occupied by the battery in a final product.

As a result, development of more simplified unit cell, in which space utilization inside the secondary battery pack is maximized, and energy density increases, and simultaneously, rigidity thereof is reinforced to secure safety of the secondary battery, a secondary battery module including the same, and a secondary battery pack are required.

CN 113 193 264 A describes a battery module including a housing, battery cell assemblies, first and second brackets disposed in the housing at opposite ends of the battery module, and an intermediate bracket disposed at a center of the battery module. The first bracket is provided with a bus bar facing the cell assembly, and is in full contact with the bus bar. CN 214 898 775 U describes a battery module including a housing assembly, battery cell packs, and end tab supports as well as end plates at opposite ends of the battery module. No apparent bus bar structure is disclosed at the longitudinal ends of the battery module. CN 214 898 777 U describes a battery module including a module frame, battery units, and end buses, end insulating plates as well as end plates at opposite ends of the battery module. The end plates and the end buses are spaced apart by the end insulating plates. US 2018 / 0 048 033 A1 describes a battery module including a housing structure, battery cells held in a cartridge stack, and insulating covers as well as voltage sensing modules at opposite ends of the battery module. The voltage sensing modules include sensing bus bars. The insulating covers respectively cover the corresponding voltage sensing modules. The insulating covers are coupled to be in contact with the voltage sensing modules.

### DISCLOSURE OF THE INVENTION

### TECHNICAL PROBLEM

The present invention is invented to solve the above problem, and an object of the present invention is to provide a logical cell, in which a pouch cell assembly in which a plurality of pouch cells are arranged is accommodated inside a case in a longitudinal direction to form a logical cell, and a reinforcing plate is provided at one side or the other side of the case to reinforce rigidity, thereby facilitating handling of the pouch cell and maximizing space utilization, and simultaneously, preventing the side that is vulnerable to an impact from being damaged so that the secondary battery is improved in safety, a secondary battery module, and a secondary battery pack including the same.

### TECHNICAL SOLUTION

A logical cell according to the present invention is described in appended claim 1.

A logical cell according to an illustrative example not forming part of the present invention includes a pouch cell assembly in which a plurality of pouch cells are arranged in the thickness direction, a case in which the plurality of pouch cell assemblies are accommodated in a longitudinal direction, wherein one end and the other end of the case are opened, a center busbar frame assembly provided between the plurality of pouch cell assemblies, and a center busbar provided in the center busbar frame assembly to electrically connect the plurality of pouch cell assemblies to each other.

### ADVANTAGEOUS EFFECTS

In the logical cell according to the present invention, the pouch cell assembly in which a plurality of pouch cells are arranged may be accommodated inside the case in the longitudinal direction to form the logical cell, and the reinforcing plate may be provided at one side or the other side of the case to reinforce rigidity, thereby facilitating the handling of the pouch cell and maximizing the space utilization, and simultaneously, preventing the side that is vulnerable to the impact from being damaged so that the secondary battery is improved in safety, a secondary battery module, and a secondary battery pack including the same.

The logical cell according to the present invention may include the pouch cell assembly in which the plurality of pouch cells are arranged in the thickness direction, the case in which the plurality of pouch cell assemblies are accommodated in the longitudinal direction and of which one side and the other side are opened, the center busbar frame assembly provided between the plurality of pouch cell assemblies, and the center busbar provided in the center busbar frame assembly and electrically connecting the plurality of pouch cell assemblies to each other, and thus, the handling of the pouch cell inside the module or the pack may be facilitated, and the space utilization and the energy density within the pack may be maximized.

### BRIEF DESCRIPTION OF THE DRAWINGS

FIG. 1 is a perspective view illustrating a secondary battery module according to a related art.
FIG. 2 is a perspective view illustrating a secondary battery pack according to the related art.
FIG. 3 is a perspective view illustrating a logical cell according to Embodiment 1 of the present invention.
FIG. 4a is an exploded perspective view illustrating the logical cell according to Embodiment 1 of the present invention, FIG. 4b illustrates a logical cell not forming part of the present invention.
FIG. 5 is a perspective view illustrating a state in which a case of the logical cell is removed according to Embodiment 1 of the present invention.
FIG. 6a is a perspective view illustrating a state in which a side busbar is provided between a side busbar frame assembly and an end plate provided with a reinforcing plate of the logical cell according to Embodiment 1 of the present invention.
FIG. 6b is an exploded perspective view illustrating the side busbar frame assembly, the reinforcing plate, the end plate, and a side busbar of the logical cell according to Embodiment 1 of the present invention.
FIG. 7a is a perspective view illustrating a pair of center busbar frame assemblies according to Embodiment 1 of the present invention.
FIG. 7b is an exploded perspective view illustrating the pair of center busbar frame assemblies and the center busbar according to Embodiment 1 of the present invention.
FIG. 8 is a perspective view illustrating an insulating plate provided between the end plate and the reinforcing plate of the logical cell according to Embodiment 1 of the present invention.
FIG. 9 is a perspective view illustrating a secondary battery pack according to Embodiment 3 of the present invention.
FIG. 10a is a perspective view illustrating a state in which a center busbar is provided in a center busbar frame assembly of a logical cell according to Example 4 not forming part of the present invention.
FIG. 10b is an exploded perspective view illustrating the center busbar frame assembly and the center busbar of the logical cell according to Example 4 not forming part of the present invention.

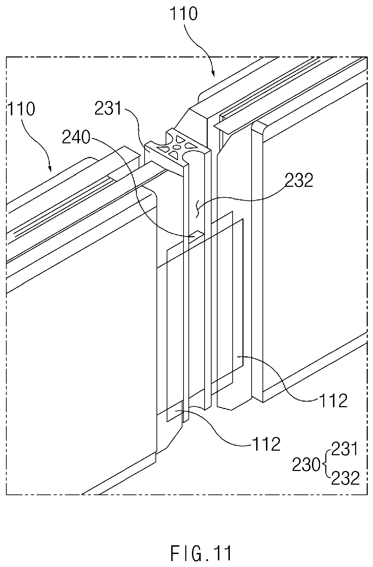

FIG. 11 is an enlarged perspective view illustrating a state in which the center busbar frame assembly and the center busbar are provided between a plurality of pouch cell assemblies.
FIG. 12a is a perspective view illustrating a state in which a front busbar frame assembly, a front cover plate, and a front busbar of the logical cell are coupled to each other according to Example 4 not forming part of the present invention.
FIG. 12b is an exploded perspective view illustrating the front busbar frame assembly, the front cover plate, and the front busbar of the logical cell according to Example 4 not forming part of the present invention.
FIG. 13 is a view illustrating a state in which the front busbar frame assembly and the front busbar are coupled to a lead of the pouch cell assembly according to Example 4 not forming part of the present invention.
FIG. 14a is a perspective view illustrating a state in which a rear busbar frame assembly and a rear cover plate of the logical cell are coupled to each other according to Example 4 not forming part of the present invention.
FIG. 14b is an exploded perspective view illustrating the rear busbar frame assembly, the rear cover plate, and the rear busbar of the logical cell according to Example 4 not forming part of the present invention.
FIG. 15 is a perspective view illustrating a secondary battery module according to Example 5 not forming part of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

### Embodiment 1

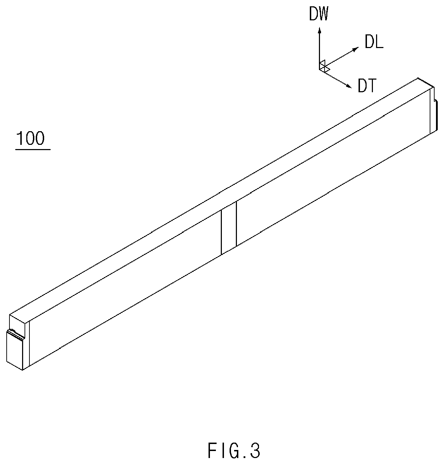

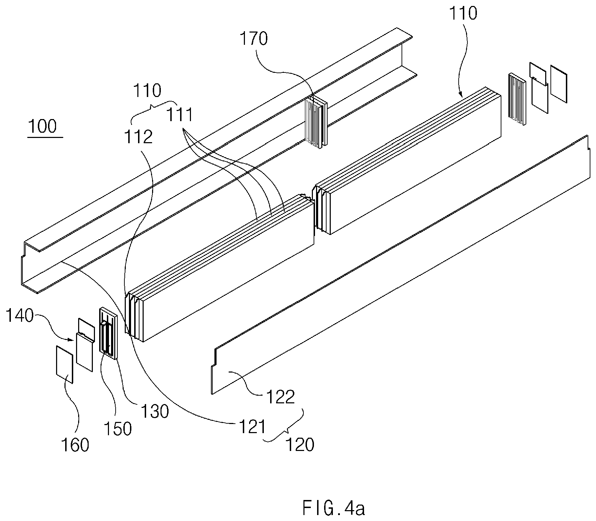

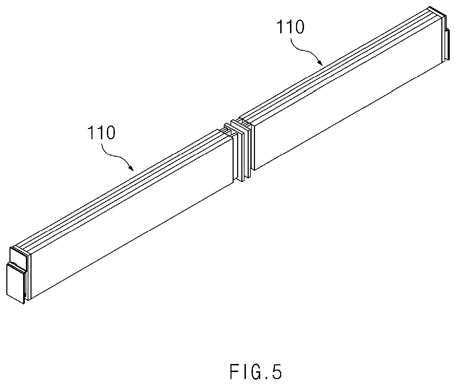

FIG. 3 is a perspective view illustrating a logical cell according to Embodiment 1 of the present invention. FIG. 4a is an exploded perspective view illustrating the logical cell according to Embodiment 1 of the present invention. FIG. 5 is a perspective view illustrating a state in which a case of the logical cell is removed according to Embodiment 1 of the present invention.

Referring to FIGS. 3, FIG. 4a, and FIG. 5, a logical cell 100 according to Embodiment 1 of the present invention includes a pouch cell assembly 110, a case 120, a side busbar frame assembly 130, an end plate 140, a side busbar 150, and a reinforcing plate 160. Here, the logical cell 100 means a unit in which a plurality of pouch cells 111 or a pouch cell assembly 110 are gathered to be electrically connected to each other.

First, the pouch cell assembly 110 is formed by arranging the plurality of pouch cells 111 in a thickness direction DT, and the case 120 is formed in a shape in which one side and other end thereof are opened so that the plurality of pouch cell assemblies 110 are accommodated in the case 120 in a longitudinal direction DL. The side busbar frame assembly 130 is coupled to the pouch cell assembly 110 at one side or other end of the case 120, and the end plate 140 is coupled to one side of the side busbar frame assembly 130 to cover one end or the other end, which is opened, of the case 120. The side busbar 150 is provided between the side busbar 150 and the end plate 140 and electrically connected to the pouch cell assembly 110 to transmit an output to the outside.

In addition, the reinforcing plate 160 of the logical cell 100 according to the present invention is provided at one side of the end plate 140. Here, the end plate 140 of the end plate 140 may mean an opposite side of the side of the end plate 140, which is coupled to the side busbar frame assembly 130. The reinforcing plate 160 may include a material that is capable of reinforcing rigidity of a side area corresponding to one side or other side of the logical cell 100, preferably aluminum.

As described above, according to the present invention, the pouch cells 111 may be arranged in the thickness direction DT to form the pouch cell assembly 110, and the plurality of pouch cell assemblies 110 may be accommodated in the longitudinal direction DL to form the logical cell 100 corresponding to a radical unit to improve easy of the handling of the cell compared to the pouch cell 111 inserted into the secondary battery module or the pack according to the related art. That is, in the previous process of the module of the secondary battery, modularization of the pouch cell 111 may be achieved and applied to the secondary battery pack having various structures and sizes.

In addition, in the process of arranging the secondary battery module inside the secondary battery pack, the secondary battery module may be arranged in the thickness direction DT to minimize an isolation cover and inter busbar, which are provided in the secondary battery pack, reduce a distance between the logical cells 100, and maximize space utilization inside the secondary battery pack, thereby optimizing a volume of the secondary battery pack and maximizing the energy density per unit volume.

In addition, the reinforcing plate 160 is additionally provided at one side of the end plate 140 to prevent a side that is vulnerable to an impact from being damaged and to improve safety of the secondary battery.

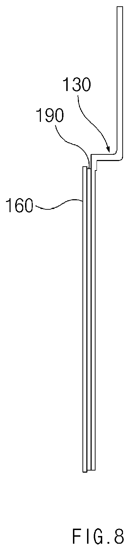

As illustrated in FIG. 8, the logical cell 100 according to the present invention may further include an insulating plate 190 provided between the end plate 140 and the reinforcing plate 160, and thus, the reinforcing plate 160 may be insulated so as not to be electrically connected to the pouch cell assembly 110 by the side busbar 150.

Referring to FIGS. 3, 4b, and 5, the logical cell 100 according to Example 4 not forming part of the present invention includes a pouch cell assembly 110, a case 120, a center busbar frame assembly 230, and a center busbar 240.

First, the pouch cell assembly 110 is formed by arranging a plurality of pouch cells 111 in a thickness direction DT, and the case 120 is formed in a shape in which one side and other end thereof are opened so that the plurality of pouch cell assemblies 110 are accommodated in the case 120 in a longitudinal direction DL. In addition, the center busbar frame assembly 230 is provided between the plurality of pouch cell assemblies 110, and the center busbar 240 is provided in the center busbar frame assembly 230 to electrically connect the plurality of pouch cell assemblies 110 to each other. That is, the logical cell 100 may mean a unit in which the plurality of pouch cells 111 or the pouch cell assembly 110 are gathered to be electrically connected to each other.

As described above, according to the present invention, the pouch cells 111 may be arranged in the thickness direction DT to form the pouch cell assembly 110, and the plurality of pouch cell assemblies 110 may be accommodated in the longitudinal direction DL to form the logical cell 100 corresponding to a radical unit to improve easy of the handling of the cell compared to the pouch cell 111 inserted into the secondary battery module or the pack according to the related art. That is, in the previous process of the module of the secondary battery, modularization of the pouch cell 111 may be achieved and applied to the secondary battery pack having various structures and sizes.

In addition, in the process of arranging the secondary battery module inside the secondary battery pack, the secondary battery module may be arranged in the thickness direction DT to minimize an isolation cover and inter busbar, which are provided in the secondary battery pack, reduce a distance between the logical cells 100, and maximize space utilization inside the secondary battery pack, thereby optimizing a volume of the secondary battery pack and maximizing the energy density per unit volume.

Hereinafter, each configuration of the logical cell 100 according to the present invention will be described in detail with reference to FIGS. 3 to 7.

First, referring to FIGS. 3, 4a and 5, the pouch cell assembly 110 is formed by gathering the plurality of pouch cells 111, and in the present invention, it is preferable that three pouch cells 111 are arranged side by side in the thickness direction DT, the longitudinal direction DL, and a width direction DW of the pouch cell 111 to form the pouch cell assembly 110. The pouch cell 111 may include a pouch made of a soft material and corresponding to an exterior, a plurality of electrode tabs drawn out from the electrode assembly, and a lead 112 protruding to the outside of the pouch. Thus, the pouch cell assembly 110 includes the lead 112 protruding from the pouch cell 111.

Next, in the case 120, the plurality of pouch cell assemblies 110 may be accommodated in the longitudinal direction DL, and in the present invention, it is preferable that two pouch cell assemblies 110 are accommodated in the longitudinal direction DL of the pouch cell assemblies 110. In addition, the case 120 is formed in a shape of which one end and the other end are opened and may be covered by the end plate 140. As described above, the logical cell 100 according to the present invention may additionally secure the rigidity by being accommodated in the case 120 additionally provided in addition to the pouch of the pouch cell 111, and thus, the need to secure the rigidity in the pack unit may be reduced to simplify a structure and volume of the pack structure. In addition, an insulating sheet may be provided between the pouch cell 111 and the case 120 to achieve insulation.

The case 120 may be integrally formed, but may be formed by coupling the first case 121 to the second case 122. Explaining this structure in detail, the first case 121 may be formed in a recessed shape in which the pouch cell assembly 110 is accommodated, and the second case 122 is formed in a flat shape to be coupled to the first case 121 at one side of the first case 121. As described above, when the case 120 is formed in the form that includes the first case 121 and the second case 122 to couple the second case 122 to the first case 121, easy of manufacturing of the logical cell 100 may be improved.

In addition, the case 120 may be formed to correspond to a shape of a side surface of the end plate 140 at one end or the other end, which is opened. The shape of the side surface of the end plate 140 will be described in detail below.

Referring to FIGS. 3, 4a and 5, the pouch cell assembly 110 is formed by gathering the plurality of pouch cells 111, and in the present invention, it is preferable that two pouch cells 111 are arranged side by side in the thickness direction DT, the longitudinal direction DL, and the width direction DW of the pouch cell 111 to form the pouch cell assembly 110. The pouch cell 111 may include a pouch made of a soft material and corresponding to an exterior, a plurality of electrode tabs drawn out from the electrode assembly, and a lead 112 protruding to the outside of the pouch. Thus, the pouch cell assembly 110 includes the lead 112 protruding from the pouch cell 111.

Next, in the case 120, the plurality of pouch cell assemblies 110 may be accommodated in the longitudinal direction DL, and in the present invention, it is preferable that two pouch cell assemblies 110 are accommodated in the longitudinal direction DL of the pouch cell assemblies 110. In addition, the case 120 may be formed to have one end and the other end, which are opened, and thus may be covered by a front cover plate 260-1 and a rear cover plate 260-2 to be described later. As described above, the logical cell 100 according to the present invention may additionally secure the rigidity by being accommodated in the case 120 additionally provided in addition to the pouch of the pouch cell 111, and thus, the need to secure the rigidity in the pack unit may be reduced to simplify a structure and volume of the pack structure. In addition, an insulating sheet I may be provided between the pouch cell 111 and the case 120 to achieve insulation.

The case 120 may be integrally formed, but may be formed by coupling the first case 121 to the second case 122. Explaining this structure in detail, the first case 121 may be formed in a recessed shape in which the pouch cell assembly 110 is accommodated, and the second case 122 is formed in a flat shape to be coupled to the first case 121 at one side of the first case 121. As described above, when the case 120 is formed in the form that includes the first case 121 and the second case 122 to couple the second case 122 to the first case 121, easy of manufacturing of the logical cell 100 may be improved.

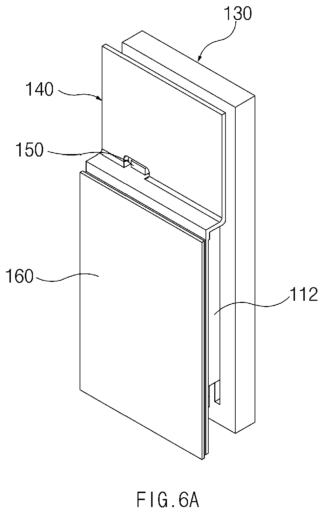

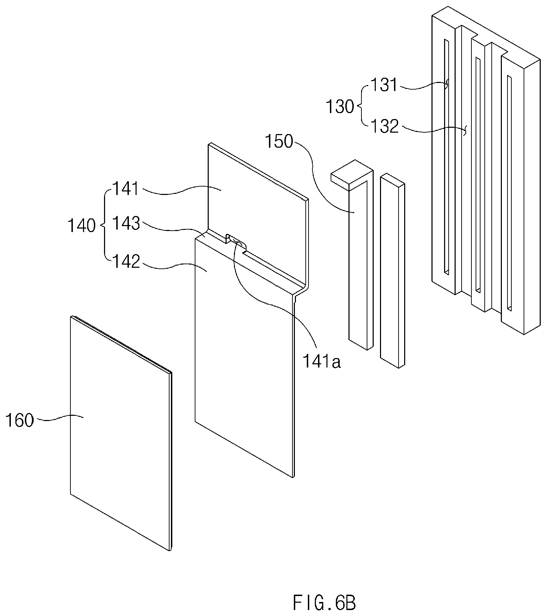

Next, the side busbar frame assembly 130 will be described with reference to FIGS. 4a, 6a and 6b. FIG. 6a is a perspective view illustrating a state in which the side busbar is provided between the side busbar frame assembly and the end plate provided with the reinforcing plate of the logical cell according to Embodiment 1 of the present invention. FIG. 6b is an exploded perspective view illustrating the side busbar frame assembly, the reinforcing plate, the end plate, and the side busbar of the logical cell according to Embodiment 1 of the present invention.

The side busbar frame assembly 130 may be an injection-molded insulating material coupled to the pouch cell assembly 110 at one end or the other end of the case 120. Also, as described above, the pouch cell assembly 110 includes leads 112 protruding from the pouch cells 111, and the side busbar frame assembly 130 includes a plurality of lead through-holes 131 into which the leads 112 of the pouch cell assembly 110 are inserted. In addition, a side busbar seating part 132 on which the side busbar 150 is seated may be formed
on an area between the plurality of side lead through-holes 131. The side busbar seating part 132 may be formed in a recessed shape to allow the side busbar 150 to be seated thereon.

Subsequently, the end plate 140 will be described with reference to FIGS. 4a and 6a and 6b. The end plate 140 is coupled to one side of the side busbar frame assembly 130 to cover one end or the other end of the case 120, which are opened. Here, one side of the side busbar frame assembly 130 means a side opposite to a side at which the side busbar frame assembly 130 is coupled to the pouch cell assembly 110 and also may mean the same direction as a direction facing the outside of the case 120. In addition, the covering of the one end or the other end of the case 120, which are opened, may mean, for example, that one end or the other end are finished coincidentally so as not to generate a height difference with respect to an opened end surface of the case 120, but is not necessarily limited thereto, i.e., may mean that the pouch cell assembly 110 is finished at the end of the case so as not to be exposed to the outside of the case 120 even if the height difference is partially generated.

Referring to the configuration of the end plate 140 in more detail with reference to FIG. 6b, the end plate 140 may include a first cover surface 141, a second cover surface 142, and a stepped surface 143.

First, the first cover surface 141 is coupled to be in contact with the side busbar frame assembly 130. That is, the first cover surface 141 is a configuration that is disposed above the end plate 140 and allows the end plate 140 to be coupled to the side busbar frame assembly 130. The first cover surface 141 may be coupled to the side busbar frame assembly 130 in various manners and may be coupled to be in contact with the side busbar frame assembly 130 in, for example, a fitting manner.

The second cover surface 142 is provided to be spaced apart from the side busbar frame assembly 130 below the first cover surface 141, and the stepped surface 143 may connect the first cover surface 141 to the second cover surface 142. Here, a stepped portion may be formed between the first cover surface 141 and the second cover surface 142, and the second cover surface 142 may be provided to be spaced apart from the side busbar frame assembly 130 by the stepped surface 143. That is, the shape of the side surface of the end plate 140 may be formed in a stepped shape by forming the stepped surface 143 between the upper first cover surface 141 and the lower second cover surface 142.

As described above, the second cover surface 142 of the end plate 140 may be provided to be spaced apart from the side busbar frame assembly 130 by the stepped surface 143, thereby securing a space between the side busbar frame assembly 130 and the end plate 140. Here, the lead 112 may be bent in this space and then be bonded to the side busbar 150 to serve as a buffer space when an external impact is applied.

In addition, a busbar through-hole 141a passing through front and rear surfaces of the first cover surface 141 is formed in the first cover surface 141, and an upper area of the side busbar 150 may be bent to pass through the busbar through-hole 141a. As a result, the side busbar 150 provided between the end plate 140 and the side busbar frame assembly 130 may be exposed to serve as an output terminal. The number of busbar through-holes 141a is not limited. For example, when the side busbar frame assembly 130, the end plate 140, and the side busbar 150 are provided at both sides of the case 120, the busbar through-hole 141a may be formed in one, and when the side busbar frame assembly 130, the end plate 140, and the side busbar 150 are provided at only one side of the case 120, the busbar through-hole 141a may be formed in two so that the two side busbars 150 are exposed to one side to serve as output terminals, respectively. In addition, the busbar through-hole 141a may be formed not only on the first cover surface 141 but also on the second cover surface 142 or the stepped surface 143 as necessary.

The side busbar 150 is provided between the side busbar frame assembly 130 and the end plate 140 and is electrically connected to the pouch cell assembly 110 to transmit an output to the outside. For this, the side busbar 150 may be made of a conductor. In addition, the pouch cell assembly 110 includes the lead 112 protruding from the pouch cell 111 as described above, and the lead 112 may be electrically connected to the side busbar 150 by welding. That is, the leads 112 are formed at both sides of the pouch cell assembly 110 and may be electrically connected to the side busbar 150 and the center busbar 180 to be described later by welding.

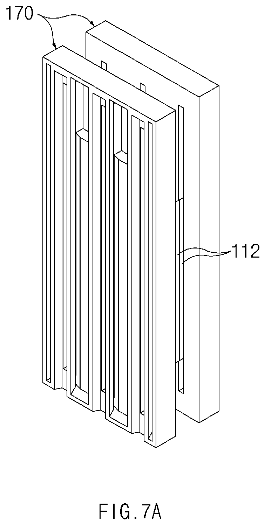

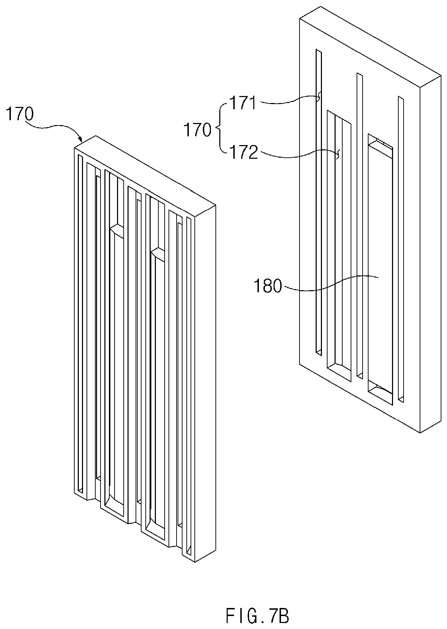

FIG. 7a is a perspective view illustrating a pair of center busbar frame assemblies according to Embodiment 1 of the present invention. FIG. 7b is an exploded perspective view illustrating the pair of center busbar frame assemblies and the center busbar according to Embodiment 1 of the present invention.

Referring to FIGS. 4a, 7a, and 7b, the logical cell 100 according to the present invention may further include a center busbar frame assembly 170 and a center busbar 180. First, a pair of center busbar frame assemblies 170 may be provided to face each other between the plurality of pouch cell assemblies 110. That is, each of the pair of center busbar frame assemblies 170 may be provided at an end of each pouch cell assembly 110 in the two pouch cell assemblies 110 accommodated in the longitudinal direction inside the case 120. The center busbar 180 may be provided in the center busbar frame assembly 170 to electrically connect the plurality of pouch cell assemblies 110 to each other.

Also, as described above in more detail, the pouch cell assembly 110 may include a lead 112 protruding from the pouch cell 111, and the center busbar frame assembly 170 may include a plurality of center lead through-holes 171 into which the lead 112 of the pouch cell assembly 110 is inserted. In addition, a center busbar seating part 172 on which the center busbar 180 is seated may be formed on an area between the plurality of center lead through-holes 171. As a result, the lead 112 may be bent while passing through the center lead through hole 171 so as to be electrically connected to the center busbar 180 of the center busbar seating part 172.

### Embodiment 2

Embodiment 2 of the present invention is different from embodiment 1 in that it is a secondary battery module including the logical cell 100 of embodiment 1. The contents that are duplicated with Embodiment 1 will be omitted as much as possible, and Embodiment 2 will be described with a focus on the differences. That is, it is obvious that the contents that are not described in Embodiment 2 may be regarded as the contents of Embodiment 1 if necessary.

The secondary battery module according to Embodiment 2 of the present invention includes a logical cell 100, a circuit board, and a cover member.

First, referring to FIG. 4a, in the secondary battery module according to the present invention, the logical cell 100 may be arranged so that a plurality of logical cells 100 are provided to overlap each other in a thickness direction. Preferably, five logical cells 100 may be arranged in the thickness of the logical cell 100 to constitute one secondary battery module. Here, the logical cell 100 may be understood as the same as the logical cell 100 according to Embodiment 1 and includes a pouch cell assembly 110 formed by arranging a plurality of pouch cells 111 in a thickness direction, a case 120 in which the plurality of pouch cell assemblies 110 are accommodated therein in the longitudinal direction and which has one end and the other end, which are opened, a side busbar frame assembly 130 coupled to the pouch cell assembly 110 at one end or the other end of the case 120, an end plate 140 coupled to one side of the side busbar frame assembly 130 to cover the one or the other open end of the case 120, a side busbar 150 provided between the side busbar frame assembly 130 and the end plate 140 and electrically connected to the pouch cell assembly 110 to transmit an output to the outside, and a reinforcing plate 160 provided at one side of the end plate 140.

The circuit board may be a printed circuit board (PCB), which electrically connects the side busbars 150 of the plurality of logical cells 100 to each other and simultaneously are integrally welded to the plurality of logical cells 100 at one side or the other side of each of the plurality of logical cells 100 so as to connect components that are necessary for controlling the secondary battery module.

In addition, the cover member may be integrally coupled to the plurality of logical cells 100 at one side or the other side of the plurality of logical cells 100 and may be coupled to cover the circuit board. The cover member may be a sensing component that protects the circuit board and the busbar from an external impact and simultaneously performs sensing.

As described above, in the secondary battery module according to the present invention, since the logical cell 100 in which the pouch cell assembly 110 is accommodated in the longitudinal direction constitutes a module, the number of components for connecting the modules to each other inside the secondary battery pack may be minimized to maximize space utilization inside the pack and increase in energy density.

In addition, while minimizing a structure in the secondary battery pack, a reinforcing plate is provided at one side or the other side of the case of the logical cell to intensively prevent a side portion that is vulnerable to the impact from being damaged, thereby improving safety of the secondary battery.

In addition, the detailed configuration of the logical cell 100 and the resulting effect, which are not separately described in Embodiment 2 of the present invention, may be understood as the same as the logical cell 100 of Embodiment 1.

### Embodiment 3

Embodiment 3 of the present invention is different from Embodiments 1 and 2 in that it is a secondary battery pack including the logical cell of Embodiment 1 and the secondary battery module of Embodiment 2. The contents that are duplicated with Embodiments 1 and 2 will be omitted as much as possible, and Embodiment 3 will be described with a focus on the differences. That is, it is obvious that the contents that are not described in Embodiment 3 may be regarded as the contents of Embodiments 1 and 2 if necessary.

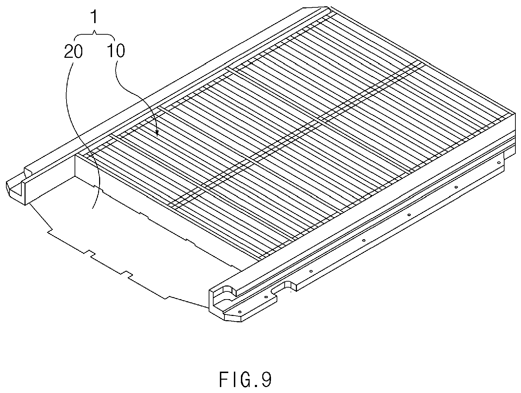

FIG. 9 is a perspective view illustrating a secondary battery pack according to Embodiment 3 of the present invention. Referring to FIG. 9, a secondary battery pack 1 according to Embodiment 3 of the present invention includes a pack case 20 and a secondary battery module 10.

The pack case 20 may have an accommodation space therein and may be made of a material having rigidity to protect the secondary battery module 10 or the logical cell accommodated therein from an external impact. A shape and size of the pack case 20 may be variously formed as necessary, but a size of the internal accommodation space of the pack case 20 may be formed so that a length of at least one side corresponds to a length of the secondary battery module 10. In addition, the secondary battery module 10 is provided in the accommodation space of the pack case 20, and particularly is arranged in the accommodation space of the pack case 20 in a thickness direction of the secondary battery module 10.

According to the related art, the secondary battery modules 10 are arranged in the lattice shape in the accommodation space inside the secondary battery pack 1, and thus, the structures for connecting the modules occupy the space inside the pack. On the other hand, according to the present invention, the secondary battery module 10 constituted by the plurality of logical cells may be arranged in one direction, that is, a thickness direction, to improve space utilization inside the pack and improve energy density. In addition, in order to reinforce the rigidity of a side area of the logical cell that is vulnerable to breakage while minimizing the number of structures inside the secondary battery pack, a reinforcing plate may be provided at one side or the other side of the case to improve safety of the secondary battery.

In addition, the detailed configurations of the logical cell and the secondary battery module and the resulting effects, which are not separately described in Embodiment 3 of the present invention, may be understood as the same as the logical cell and the secondary battery module of Embodiments 1 and 2.

While the embodiments of the present invention have been described with reference to the specific embodiments, it will be apparent to those skilled in the art that various changes and modifications may be made without departing from the scope of the invention as defined in the following claims.

### Example 4

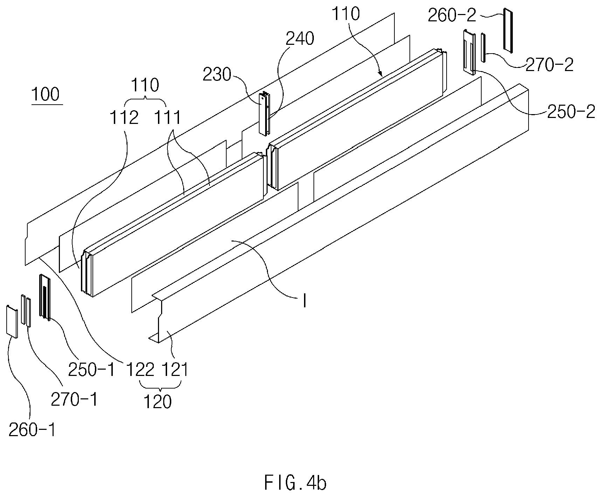

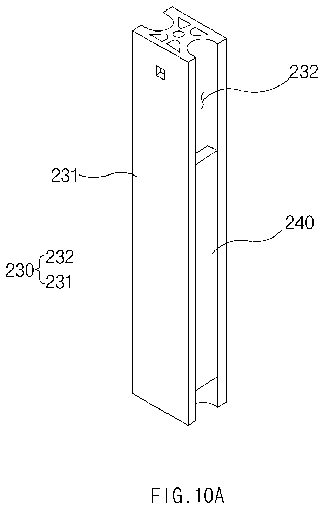

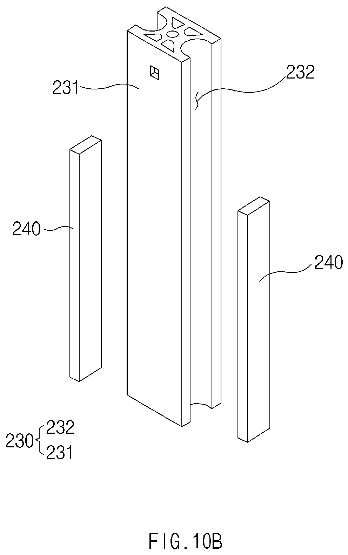

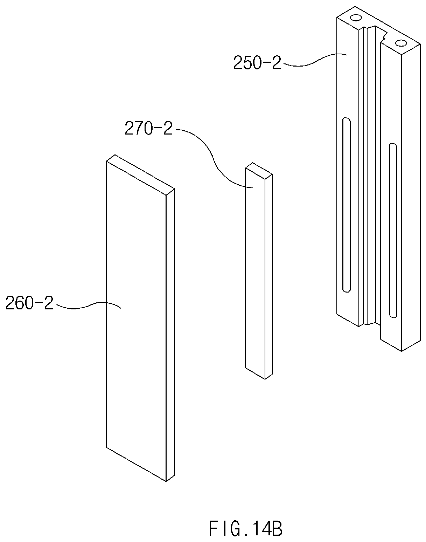

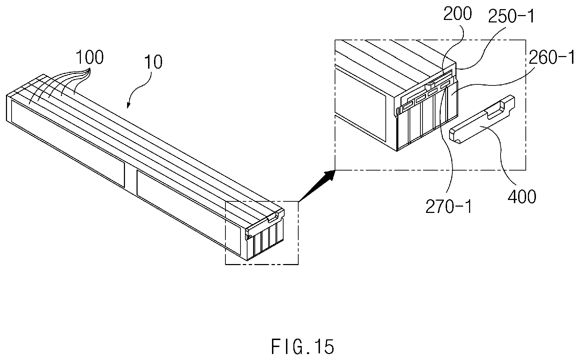

Next, a center busbar frame assembly 230 will be described in detail with reference to FIGS. 10a, 14b, and 15. FIG. 4b is an exploded perspective view illustrating a logical cell according to Example 4 not forming part of the present invention. FIG. 10a is a perspective view illustrating a state in which a center busbar is provided in a center busbar frame assembly of the logical cell according to Example 4 not forming part of the present invention. FIG. 14b is an exploded perspective view illustrating a rear busbar frame assembly, a rear cover plate, and a rear busbar of the logical cell according to Example 4 not forming part of the present invention. FIG. 15 is an enlarged perspective view illustrating a state in which the center busbar frame assembly and the center busbar are provided between a plurality of pouch cell assemblies.

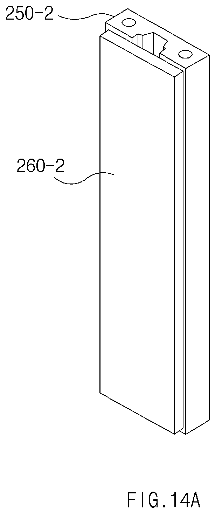

As illustrated in FIGS. 10a and 14b, a center busbar frame assembly 230 may include a pair of supports 231 and a pair of center busbar seating parts 232.

The support 231 may be provided in a pair to support the pouch cell assembly 110 between the pouch cell assemblies 110 (see FIG. 4b), and the center busbar mounting part 232 may be provided in a pair to be recessed in a direction perpendicular to the pair of supports 231 between the pair of supports 231. Here, that the supports 231 are provided in the pair may mean that the two supports 231 are formed to face opposite directions in the same line. Also, that the center busbar seating parts 232 are provided in the pair may mean that the two center busbar seating parts 232 are formed to face opposite directions in the same line.

The center busbar 240 may be provided by being inserted into the center busbar seating part 232. The center busbar 240 may be made of a conductor to transmit electrical energy and may electrically connect the pouch cell assemblies 110, which are provided on both sides of the center busbar frame assembly 230 in a state of being inserted into the center busbar seating part 232, to each other. When explained with reference to FIG. 15, the pouch cell assembly 110 may include a lead 112 protruding from the pouch cell 111, and the lead 112 may be coupled to the center busbar 240 by welding to electrically connect the plurality of pouch cell assemblies 110 to each other.

As described above, the center busbar seating part 232 may be formed to be recessed in a direction perpendicular to the support 231 formed to support the pouch cell assembly 110, and a busbar may be provided to be inserted into the center busbar seating part 232 so that the pouch cell assembly 110 is supported on the support 231, and also, the lead 112 formed to protrude in a longitudinal direction of the pouch cell assembly 110 is coupled to the busbar, thereby electrically connect the pouch cell assemblies 110 provided at both sides of the center busbar frame assembly 230 to each other.

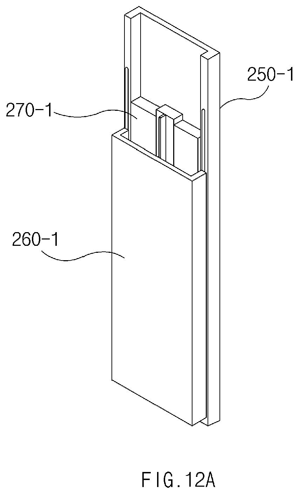

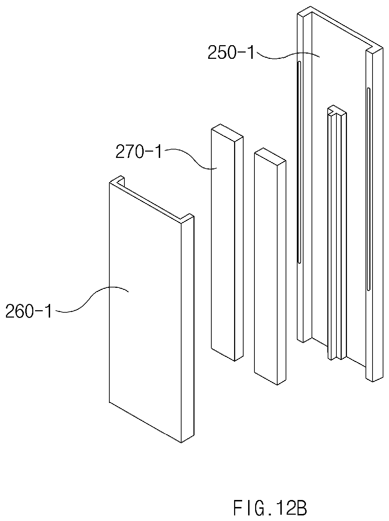

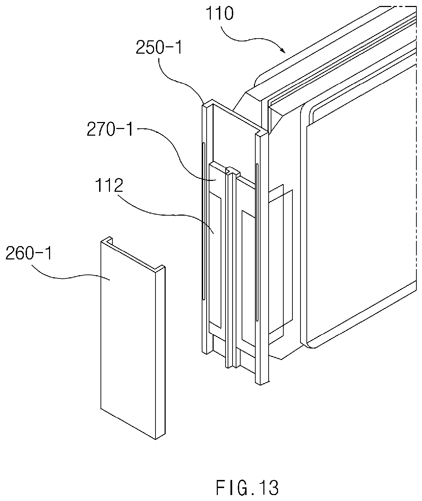

As illustrated in FIGS. 4b, 12a, 12b and 13, the logical cell 100 according to the present invention may further include a front busbar frame assembly 250-1, a front cover plate 260-1, and a front busbar 270-1. FIG. 12a is a perspective view illustrating a state in which a front busbar frame assembly, a front cover plate, and a front busbar of the logical cell are coupled to each other according to Example 4 not forming part of the present invention. FIG. 12b is an exploded perspective view illustrating the front busbar frame assembly, the front cover plate, and the front busbar of the logical cell according to Example 4 not forming part of the present invention. FIG. 13 is a view illustrating a state in which the front busbar frame assembly and the front busbar are coupled to a lead of the pouch cell assembly according to Example 4 not forming part of the present invention.

Referring to FIGS. 4b and 12a and 12b, the front busbar frame assembly 250-1 may be an injection-molded product coupled to the pouch cell assembly 110 at one side of the case 120. Here, one side of the case 120 may mean any one side of both sides of the case 120 in the longitudinal direction. A seating part of the front busbar 270-1, on which the front busbar 270-1 is seated, and a lead through-hole, through which the lead 112 passes to be in contact with the front busbar 270-1 may be formed in the front busbar frame assembly 250-1.

In addition, the front cover plate 260-1 may be coupled to one side of the front busbar frame assembly 250-1 to cover opened one end of the case 120. Here, one side of the front busbar frame assembly 250-1 may mean a side opposite to a side at which the front busbar frame assembly 250-1 is coupled to the pouch cell assembly 110 and also may mean a direction facing the outside of the case 120. In addition, the covering of the opened one end of the case 120 may mean, for example, that one end is finished coincidentally so as not to generate a height difference with respect to an opened end surface of the case 120, but is not necessarily limited thereto, i.e., may mean that the pouch cell assembly 110 is finished at the end of the case so as not to be exposed to the outside of the case 120 even if the height difference is partially generated.

The front busbar 270-1 may further include a front busbar 270-1 provided between the front busbar frame assembly 250-1 and the front cover plate 260-1 and electrically connected to the pouch cell assembly 110 to transmit an output to the outside. As described above, the logical cell 100 according to the present invention may be provided with the front busbar 270-1 electrically connected to the pouch cell assembly 110 at one side of the case 120 to transmit an output to the outside in a single direction, thereby facilitate an arrangement and assembly inside the module and the pack.

In addition, referring to FIG. 13, as described above, the pouch cell assembly 110 may include a lead 112 protruding from the pouch cell, and the lead 112 may be electrically connected to the front busbar 270-1 by welding to transmit an output to the outside. That is, the leads 112 are formed on both sides of the pouch cell assembly 110 and may be electrically connected to the center busbar and the front busbar 270-1 by the welding, respectively.

The front cover plate 260-1 may be coupled to a lower portion of one side of the front busbar frame assembly 250-1. Here, the front cover plate 260-1 may be coupled to the front busbar frame assembly 250-1 so that an upper portion of the front busbar 270-1 is exposed.

Referring also to FIG. 4b, a shape of a side surface of opened one end of the case 120 of the logical cell 100 according to the present invention may be formed to correspond to the of each of side surfaces of the front cover plate 260-1 and the front busbar frame assembly 250-1.

Next, referring to FIGS. 4b, 14a, and 14b, the logical cell 100 according to the present invention may include a rear busbar frame assembly 250-2, a rear cover plate 260-2, and a rear busbar 270-2. FIG. 14a is a perspective view illustrating a state in which the rear busbar frame assembly and the rear cover plate of the logical cell are coupled to each other according to Example 4 not forming part of the present invention. FIG. 14b is an exploded perspective view illustrating the rear busbar frame assembly, the rear cover plate, and the rear busbar of the logical cell according to Example 4 not forming part of the present invention.

The rear busbar frame assembly 250-2 may be an injection-molded product coupled to the pouch cell assembly 110 at the other side of the case 120. Here, the other side of the case 120 may mean the other side opposite to the one side of both the sides of the case 120 in the longitudinal direction. A seating part of the rear busbar 270-2, on which the rear busbar 270-2 is seated, and a through-hole of the lead 112 through which the lead 112 passes to be in contact with the rear busbar 270-2 may be formed in the rear busbar frame assembly 250-2.

In addition, the rear cover plate 260-2 may be coupled to one side of the rear busbar frame assembly 250-2 to cover the other end of the case 120, which is opened. One side of the rear busbar frame assembly 250-2 may mean a side opposite to a side at which the rear busbar frame assembly 250-2 is coupled to the pouch cell assembly 110 and also may mean a direction facing the outside of the case 120. In addition, the covering of the other end of the case 120, which is opened, may mean, for example, that the other end is finished coincidentally so as not to generate a height difference with respect to an opened end surface of the case 120, but is not necessarily limited thereto, i.e., may mean that the pouch cell assembly 110 is finished at the end of the case so as not to be exposed to the outside of the case 120 even if the height difference is partially generated.

In addition, the rear busbar 270-2 may be provided between the rear busbar frame assembly 250-2 and the rear cover plate 260-2 to electrically connect the pouch cells 111 of the pouch cell assembly 110 to each other. That is, the rear busbar 270-2 may serve to electrically connect the pouch cells 111 of the pouch cell assembly 110 to each other without transmitting the output of the pouch cell assembly 110 to the outside.

The rear cover plate 260-2 may be coupled to one side of the rear busbar frame assembly 250-2 to cover the entire surface of the rear busbar 270-2. That is, the rear busbar 270-2 disposed at the other side of the case 120 may be provided between the rear busbar frame assembly 250-2 and the rear cover plate 260-2 and may not be exposed to the outside by the rear cover plate 260-2 that covers the entire surface of the rear busbar frame assembly 250-2. Therefore, the logical cell 100 according to the present invention may transmit the output from the front busbar 270-1 provided at the one side of the case to the outside in the single direction. As a result, in the logical cell 100 according to the present invention, since the output terminal due to the busbar may be unified in one direction (one side of the case) to facilitate the coupling of the components, the connection of the cells, and the formation of the module.

### Example 5

Example 5 not forming part of the present invention is different from Example 4 in that it is a secondary battery module 10 including the logical cell 100 of Example 4. The contents that are duplicated with Example 4 will be omitted as much as possible, and Example 5 will be described with a focus on the differences. That is, it is obvious that the contents that are not described in Example 5 may be regarded as the contents of Example 4 if necessary.

Referring to FIG. 15, a secondary battery module 10 according to Example 5 not forming part of the present invention includes a logical cell 100, a circuit board 300, and a cover member 400. FIG. 15 is a perspective view illustrating a secondary battery module according to Example 5 not forming part of the present invention.

First, in the secondary battery module 10 according to the present invention, the logical cell 100 may be arranged so that a plurality of logical cells 100 are provided to overlap each other in a thickness direction. Preferably, five logical cells 100 may be arranged in the thickness of the logical cell 100 to constitute one secondary battery module 10. Here, the logical cell 100 may be understood as the same as the logical cell 100 of Example 4, and as illustrated in FIG. 4b, may include a pouch cell assembly 110, in which a plurality of pouch cells 111 are arranged in a thickness direction, a case 120 in which the plurality of pouch cell assemblies 110 are accommodated in a longitudinal direction and of which one side and the other side are opened, a center busbar frame assembly 230 provided between the plurality of pouch cell assemblies 110, and a center busbar 240 provided in the center busbar frame assembly 230 to electrically connect the plurality of pouch cell assemblies 110 to each other.

The circuit board 300 may be a printed circuit board (PCB, 300), which electrically connects the front busbars 270-1 of the plurality of logical cells 100 to each other and simultaneously are integrally welded to the plurality of logical cells 100 at one side of each of the plurality of logical cells 100 so as to connect components that are necessary for controlling the secondary battery module 10.

In addition, the cover member 400 may be integrally coupled to the plurality of logical cells 100 at the one side of the plurality of logical cells 100 and may be coupled to cover the circuit board 300. The cover member 400 may be a sensing component that protects the circuit board 300 and the busbar from an external impact and performs sensing.

As described above, in the secondary battery module 10 according to the present invention, since the logical cell 100 in which the pouch cell assembly 110 is accommodated in the longitudinal direction constitutes a module, the number of components for connecting the modules to each other inside the secondary battery pack may be minimized to maximize space utilization inside the pack and increase in energy density.

In addition, the logical cell 100 may further include a front busbar frame assembly 250-1 coupled to the pouch cell assembly 110 at one side of the case 120, a front cover plate 260-1 coupled to one side of the front busbar frame assembly 250-1 to cover the opened one end of the case 120, and a front busbar 270-1 provided between the front busbar frame assembly 250-1 and the front cover plate 260-1 and electrically connected to the pouch cell assembly 110 to transmit an output to the outside. In this case, the circuit board 300 may be integrally welded to the front busbar 270-1 of the plurality of logical cells 100.

As described above, the logical cell 100 of the secondary battery module 10 according to the present invention may include the front busbar 270-1 electrically connected to the pouch cell assembly 110 at the one side of the case 120 as described above. Thus, since the output direction of the secondary battery module 10 is unified in the single direction, the arrangement and assembly inside the pack may be easy, the structure may be simplified to improve energy density inside the secondary battery pack.

In addition, the detailed configuration of the logical cell 100 and the resulting effect, which are not separately described in Example 5 not forming part of the present invention, may be understood as the same as the logical cell 100 of Example 4.

### Example 6

Example 6 not forming part of the present invention is different from Examples 4 and 5 in that it is a secondary battery pack 1 including the logical cell 100 of Example 4 and the secondary battery module 10 of Example 5. The contents that are duplicated with Examples 4 and 5 will be omitted as much as possible, and Example 6 will be described with a focus on the differences. That is, it is obvious that the contents that are not described in Example 6 may be regarded as the contents of Examples 4 and 5 if necessary.

The secondary battery pack 1 according to Example 6 not forming part of the present invention includes a pack case 20 and a secondary battery module 10. FIG. 12 is a perspective view illustrating a secondary battery pack according to Example 6 not forming part of the present invention.

The pack case 20 may have an accommodation space therein and may be made of a material having rigidity to protect the secondary battery module 10 or the logical cell 100 accommodated therein from an external impact. A shape and size of the pack case 20 may be variously formed as necessary, but a size of the internal accommodation space of the pack case 20 may be formed so that a length of at least one side corresponds to a length of the secondary battery module 10. In addition, the secondary battery module 10 is provided in the accommodation space of the pack case 20, and particularly is arranged in the accommodation space of the pack case 20 in a thickness direction of the secondary battery module 10.

According to the related art, the secondary battery modules 10 are arranged in the lattice shape in the accommodation space inside the secondary battery pack 1, and thus, the structures for connecting the modules occupy the space inside the pack. On the other hand, according to the present invention, the secondary battery module 10 constituted by the plurality of logical cells 100 may be arranged in one direction, that is, a thickness direction, to improve space utilization inside the pack and improve energy density.

In addition, the detailed configurations of the logical cell 100 and the secondary battery module 10 and the resulting effects, which are not separately described in Example 6 of the present invention, may be understood as the same as the logical cell 100 and the secondary battery module 10 of Embodiments 1 and 2.

### [Description of the Symbols]

1: Secondary battery pack
10: Secondary battery module
20: Pack case
100: Logical cell
110: Pouch cell assembly
111: Pouch cell
112: Lead
120: Case
121: First case
122: Second case
130: Side busbar frame assembly
131: Side lead through-hole
132: Side busbar seating part
140: End plate
141: First cover surface
141a: Busbar through-hole
142: Second cover surface
143: Stepped surface
150: Side busbar
160: Reinforcing plate
170: Center busbar frame assembly
171: Center lead through-hole
172: Center busbar seating part
180: Center busbar
190: Insulating plate
230: Center busbar frame assembly
231: Support
232: Center busbar seating part
240: Center busbar
250-1: Front busbar frame assembly
250-2: Rear busbar frame assembly
260-1: Front cover plate
260-2: Rear cover plate
270-1: Front busbar
270-2: Rear busbar
300: Circuit board
400: Cover member

## Claims

1. A logical cell (100) comprising:
a case (120) in which a pouch cell assembly (110) is accommodated;
a side busbar frame assembly (130) coupled to the pouch cell assembly (110) at one side or the other side of the case (120); and
an end plate (140) coupled to one side of the side busbar frame assembly (130) to cover the one side or the other side of the case (120), which are opened,
wherein the end plate (140) comprises:
a first cover surface (141) configured to allow the end plate (140) to be coupled to the side busbar frame assembly (130) and that is coupled to be in contact with the side busbar frame assembly (130); and
a second cover surface (142);
the second cover surface (142) is provided to be spaced apart from the side busbar frame assembly (130) under the first cover surface (141), wherein the logical cell (100) further comprises:
a side busbar (150) provided between the side busbar frame assembly (130) and the end plate (140) and electrically connected to the pouch cell assembly (110) to transmit an electrical output of the pouch cell
assembly (110) to the outside of the logical cell (100); and
a reinforcing plate (160) provided at one side of the end plate (140), wherein the pouch cell assembly (110) comprises:
a plurality of pouch cells (111); and
a lead (112) protruding from each of the pouch cells (111), wherein
the side busbar frame assembly (130) has a plurality of side lead through-holes (131) into which the leads (112) of the pouch cell assembly (110) are inserted.

2. The logical cell (100) of claim 1, wherein the end plate (140) further comprises a stepped surface (143) configured to connect the first cover surface (141) to the second cover surface (142), wherein a height difference occurs between the first cover surface (141) and the second cover surface (142),
wherein the second cover surface (142) is provided to be spaced apart from the side busbar frame by the stepped surface (143).

3. The logical cell (100) of claim 2, wherein the first cover surface (141) has a busbar through-hole (141a) that passes through front and rear surfaces of the first cover surface (141), and
the side busbar (150) has an upper area that is bent to pass through the busbar through-hole (141a).

4. The logical cell (100) of claim 1, wherein the side busbar frame assembly (130) has
a side busbar seating part (132) on which the side busbar (150) is seated is formed between an area between the plurality of side lead through-holes (131).

5. The logical cell (100) of claim 1, further comprising:
a pair of center busbar frame assemblies (170, 230) provided to face each other between the pouch cell assembly (110), which is provided in plurality; and
a center busbar (180, 240) provided in the center busbar frame assembly (170, 230) to electrically connect the plurality of pouch cell assemblies (110) to each other.

6. The logical cell (100) of claim 5, wherein
the center busbar frame assembly (170, 230) has a plurality of center lead through-holes (171) into which the leads (112) of the pouch cell assembly (110) are inserted, and
a center busbar seating part (172, 232) on which the center busbar (180, 240) is seated is formed between an area between the plurality of center lead through-holes (171).

7. The logical cell (100) of claim 1, wherein the case (120) comprises:
a first case (121) provided in a shape that is recessed to accommodate the pouch cell assembly (110); and
a planar-shaped second case coupled to the first case (121) at one side of the first case (121).

8. The logical cell (100) of claim 1, wherein the case (120) is formed to correspond to a shape of a side surface of the end plate (140) at one side or the other side, which is opened.

9. The logical cell (100) of claim 1, further comprising an insulating plate (190) between the end plate (140) and the reinforcing plate (160).

10. A secondary battery module (10) comprising:
a plurality of logical cells (100) according to any one of the claims 1 to 9 arranged to overlap each other in a thickness direction (DT);
a circuit board (300) integrally welded to the plurality of logical cells (100) at one side or the other side of each of the plurality of logical cells (100); and
a cover member (400) configured to cover the circuit board (300) at the one side or the other side of each of the plurality of logical cells (100).

11. A secondary battery pack (1) comprising:
a pack case (20) provided with an accommodation space therein; and
a plurality of secondary battery modules (10) according to claim 10 provided in the accommodation space of the pack case (20) and arranged in a thickness direction (DT).

## Patentansprüche

1. Logische Zelle (100), umfassend:
ein Gehäuse (120), in dem eine Pouchzellenanordnung (110) aufgenommen ist;
eine seitliche Stromschienenrahmenanordnung (130), die an einer Seite oder der anderen Seite des Gehäuses (120) mit der Pouchzellenanordnung (110) gekoppelt ist; und
eine Endplatte (140), die mit einer Seite der seitlichen Stromschienenrahmenanordnung (130) gekoppelt ist, um die eine Seite oder die andere Seite des Gehäuses (120), die offen sind, abzudecken,
wobei die Endplatte (140) umfasst:
eine erste Abdeckfläche (141), die dazu ausgebildet ist, zu ermöglichen, dass die Endplatte (140) mit der seitlichen Stromschienenrahmenanordnung (130) gekoppelt wird, und die derart gekoppelt ist, dass sie mit der seitlichen Stromschienenrahmenanordnung (130) in Kontakt steht; und
eine zweite Abdeckfläche (142);
wobei die zweite Abdeckfläche (142) unterhalb der ersten Abdeckfläche (141) beabstandet von der seitlichen Stromschienenrahmenanordnung (130) vorgesehen ist,
wobei die logische Zelle (100) ferner umfasst:
eine seitliche Stromschiene (150), die zwischen der seitlichen Stromschienenrahmenanordnung (130) und der Endplatte (140) vorgesehen ist und elektrisch mit der Pouchzellenanordnung (110) verbunden ist, um eine elektrische Ausgabe der Pouchzellenanordnung (110) zur Außenseite der logischen Zelle (100) zu übertragen; und
eine Verstärkungsplatte (160), die an einer Seite der Endplatte (140) vorgesehen ist, wobei die Pouchzellenanordnung (110) umfasst:
eine Mehrzahl von Pouchzellen (111); und
einen Ableiter (112), der von jeder der Pouchzellen (111) vorsteht,
wobei die seitliche Stromschienenrahmenanordnung (130) eine Mehrzahl von seitlichen Ableiter-Durchgangslöchern (131) aufweist, in welche die Ableiter (112) der Pouchzellenanordnung (110) eingeführt sind.

2. Logische Zelle (100) nach Anspruch 1, wobei die Endplatte (140) ferner eine Stufenfläche (143) umfasst, die dazu ausgebildet ist, die erste Abdeckfläche (141) mit der zweiten Abdeckfläche (142) zu verbinden, wobei zwischen der ersten Abdeckfläche (141) und der zweiten Abdeckfläche (142) ein Höhenunterschied besteht,
wobei die zweite Abdeckfläche (142) durch die Stufenfläche (143) beabstandet von dem seitlichen Stromschienenrahmen vorgesehen ist.

3. Logische Zelle (100) nach Anspruch 2,
wobei die erste Abdeckfläche (141) ein Stromschienen-Durchgangsloch (141a) aufweist, das eine Vorderfläche und eine Rückfläche der ersten Abdeckfläche (141) durchdringt, und
wobei die seitliche Stromschiene (150) einen oberen Bereich aufweist, der gebogen ist, um durch das Stromschienen-Durchgangsloch (141a) hindurchzutreten.

4. Logische Zelle (100) nach Anspruch 1, wobei die seitliche Stromschienenrahmenanordnung (130) einen seitlichen Stromschienen-Aufnahmeabschnitt (132) aufweist, auf dem die seitliche Stromschiene (150) aufgenommen ist, wobei der seitliche Stromschienen-Aufnahmeabschnitt (132) in einem Bereich zwischen der Mehrzahl von seitlichen Ableiter-Durchgangslöchern (131) ausgebildet ist.

5. Logische Zelle (100) nach Anspruch 1, ferner umfassend:
ein Paar von mittigen Stromschienenrahmenanordnungen (170, 230), die einander zugewandt zwischen den Pouchzellenanordnungen (110), die in einer Mehrzahl vorgesehen sind, vorgesehen sind; und
eine mittige Stromschiene (180, 240), die in der mittigen Stromschienenrahmenanordnung (170, 230) vorgesehen ist, um die Mehrzahl von Pouchzellenanordnungen (110) elektrisch miteinander zu verbinden.

6. Logische Zelle (100) nach Anspruch 5, wobei die mittige Stromschienenrahmenanordnung (170, 230) eine Mehrzahl von mittigen Ableiter-Durchgangslöchern (171) aufweist, in welche die Ableiter (112) der Pouchzellenanordnung (110) eingeführt sind, und
wobei ein mittiger Stromschienen-Aufnahmeabschnitt (172, 232), auf dem die mittige Stromschiene (180, 240) aufgenommen ist, in einem Bereich zwischen der Mehrzahl von mittigen Ableiter-Durchgangslöchern (171) ausgebildet ist.

7. Logische Zelle (100) nach Anspruch 1, wobei das Gehäuse (120) umfasst:
ein erstes Gehäuse (121), das in einer ausgesparten Form vorgesehen ist, um die Pouchzellenanordnung (110) aufzunehmen; und
ein eben ausgebildetes zweites Gehäuse, das an einer Seite des ersten Gehäuses (121) mit dem ersten Gehäuse (121) gekoppelt ist.

8. Logische Zelle (100) nach Anspruch 1, wobei das Gehäuse (120) an der einen Seite oder der anderen Seite, die offen ist, derart ausgebildet ist, dass es einer Form einer Seitenfläche der Endplatte (140) entspricht.

9. Logische Zelle (100) nach Anspruch 1, ferner umfassend eine Isolierplatte (190) zwischen der Endplatte (140) und der Verstärkungsplatte (160).

10. Sekundärbatteriemodul (10), umfassend:
eine Mehrzahl von logischen Zellen (100) nach einem der Ansprüche 1 bis 9, die derart angeordnet sind, dass sie einander in einer Dickenrichtung (DT) überlappen;
eine Leiterplatte (300), die an einer Seite oder der anderen Seite jeder der Mehrzahl von logischen Zellen (100) integral mit der Mehrzahl von logischen Zellen (100) verschweißt ist; und
ein Abdeckelement (400), das dazu ausgebildet ist, die Leiterplatte (300) an der einen Seite oder der anderen Seite jeder der Mehrzahl von logischen Zellen (100) abzudecken.

11. Sekundärbatteriepack (1), umfassend:
ein Packgehäuse (20), das in seinem Inneren mit einem Aufnahmeraum versehen ist; und
eine Mehrzahl von Sekundärbatteriemodulen (10) nach Anspruch 10, die in dem Aufnahmeraum des Packgehäuses (20) vorgesehen und in einer Dickenrichtung (DT) angeordnet sind.

## Revendications

1. Cellule logique (100) comprenant :
un boîtier (120) dans lequel est situé un ensemble de cellule de poche (110) ;
un ensemble de cadre de barre omnibus latéral (130) accouplé à l'ensemble de cellule de poche (110) sur un côté ou l'autre côté du boîtier (120) ; et
une flasque (140) accouplée à un côté de l'ensemble de cadre de barre omnibus latéral (130) pour couvrir l'un côté ou l'autre côté du boîtier (120), qui sont ouverts,
la flasque (140) comprenant :
une première surface de couverture (141) configurée pour permettre l'accouplement de la flasque (140) à l'ensemble de cadre de barre omnibus latéral (130), et accouplée afin d'être au contact de l'ensemble de cadre de barre omnibus latéral (130) ; et
une deuxième surface de couverture (142) ;
la deuxième surface de couverture (142) étant agencée pour être espacée de l'ensemble de cadre de barre omnibus latéral (130) sous la première surface de couverture (141), la cellule logique (100) comprenant en outre :
une barre omnibus latérale (150) agencée entre l'ensemble de cadre de barre omnibus latéral (130) et la flasque (140), et connectée électriquement à l'ensemble de cellule de poche (110) pour transmettre un signal électrique de l'ensemble de cellule de poche (110) à l'extérieur de la cellule logique (100) ; et
une plaque de renforcement (160) agencée sur un côté de la flasque (140), l'ensemble de cellule de poche (110) comprenant :
une pluralité de cellules de poche (111) ; et
un conducteur (112) dépassant de chacune des cellules de poche (111),
l'ensemble de cadre de barre omnibus latéral (130) possédant une pluralité d'orifices traversants latéraux de conducteurs (131) dans lesquels sont insérés les conducteurs (112) de l'ensemble de cellule de poche (110).

2. Cellule logique (100) selon la revendication 1, la flasque (140) comprenant en outre une surface étagée (143) configurée pour connecter la première surface de couverture (141) à la deuxième surface de couverture (142), une différence de hauteur survenant entre la première surface de couverture (141) et la deuxième surface de couverture (142),
la deuxième surface de couverture (142) étant agencée pour être espacée du cadre de barre omnibus latérale par la surface étagée (143).

3. Cellule logique (100) selon la revendication 2, la première surface de couverture (141) possédant un orifice traversant de barre omnibus (141a) passant à travers les surfaces antérieure et postérieure de la première surface de couverture (141),
la barre omnibus latérale (150) possédant une surface supérieure fléchie pour passer à travers l'orifice traversant de barre omnibus (141a).

4. Cellule logique (100) selon la revendication 1, l'ensemble de cadre de barre omnibus latéral (130) possédant un élément d'appui pour barre omnibus latérale (132) sur lequel la barre omnibus latérale (150) est formée entre une zone située entre la pluralité d'orifices traversants latéraux de conducteurs (131).

5. Cellule logique (100) selon la revendication 1, comprenant en outre :
une paire d'ensembles de cadre de barre omnibus centrale (170, 230) agencés de façon à se faire face entre l'ensemble de cellule de poche (110), agencé en une pluralité, et
une barre omnibus centrale (180, 240) agencée dans l'ensemble de cadre de barre omnibus centrale (170, 230) pour connecter électriquement entre eux la pluralité d'ensembles de cellules de poche (110).

6. Cellule logique (100) selon la revendication 5,
l'ensemble de cadre de barre omnibus centrale (170, 230) possédant une pluralité d'orifices traversants centraux pour conducteurs (171) dans lesquels sont insérés les conducteurs (112) de l'ensemble de cellules de poche (110), et
un élément d'appui pour barre omnibus centrale (172, 232) sur lequel la barre omnibus centrale (180, 240) est placée étant formé entre une zone située entre la pluralité d'orifices traversants centraux pour conducteurs (171).

7. Cellule logique (100) selon la revendication 1, le boîtier (120) comprenant :
un premier boîtier (121) agencé avec une forme évidée pour recevoir l'ensemble de cellules de poche (110) ; et
un deuxième boîtier de forme plane couplé au premier boîtier (121) sur un côté du premier boîtier (121).

8. Cellule logique (100) selon la revendication 1, le boîtier (120) étant façonné de sorte qu'il corresponde à la forme d'une surface latérale de la flasque (140) sur un côté ou l'autre côté, qui est ouvert.

9. Cellule logique (100) selon la revendication 1, comprenant en outre une plaque isolante (190) entre la flasque (140) et la plaque de renforcement (160).

10. Module de batterie secondaire (10) comprenant :
une pluralité de cellules logiques (100) selon une quelconque des revendications 1 à 9, agencées pour se chevaucher dans le sens de l'épaisseur (DT) ;
une carte de circuit imprimé (300) soudée de façon intégrante à la pluralité de cellules logiques (100) sur un côté ou l'autre côté de chacune de la pluralité de cellules logiques (100) ; et
un élément de couverture (400) configuré pour couvrir la carte de circuit imprimé (300) sur un côté ou l'autre côté de chacune de la pluralité de cellules logiques (100).

11. Un bloc-batterie secondaire (1) comprenant :
un boîtier de bloc (20) agencé avec un espace de réception dedans ; et
une pluralité de modules de batterie secondaire (10) selon la revendication 10 agencés dans l'espace de réception du boîtier de bloc (20), et agencés dans le sens de l'épaisseur (DT).
